# EUROPEAN PATENT SPECIFICATION

(11) **EP 4 211 881 B1**
(45) Date of publication and mention of the grant of the patent: **30.09.2026**
(21) Application number: 20797507.9
(22) Date of filing: 03.11.2020
(51) Int. Cl.: H04L 43/026, H04L 41/0806, H04L 12/14, H04L 41/0894, H04M 15/00, H04W 4/24

(54) **TRAFFIC CLASSIFICATION RULES BASED ON ANALYTICS**
VERKEHRSKLASSIFIZIERUNGSREGELN AUF DER BASIS VON ANALYTIK
RÈGLES DE CLASSIFICATION DE TRAFIC BASÉES SUR DES ANALYSES

(30) Priority: 11.09.2020 EP 20382800
(43) Date of publication of application: 19.07.2023
(73) Proprietor: Telefonaktiebolaget LM Ericsson (publ), 164 83 Stockholm (SE)
(72) Inventor: MUÑOZ DE LA TORRE ALONSO, Miguel Angel, 28002 Madrid (ES); VILLASANTE MARCOS, Carlota, 28028 Madrid (ES)
(74) Representative: Ericsson
(86) International application number: PCT/EP2020/080739
(87) International publication number: WO 2022/053168

(56) References cited:
- WO-A1-2019/234481
- CHINA MOBILE: "KI#14, Sol#46: Removing FFS on how to determine App ID for new PFD", vol. SA WG2, no. e-meeting; 20200819 - 20200901, 13 August 2020 (2020-08-13), XP051920207, Retrieved from the Internet <URL:https://ftp.3gpp.org/tsg_sa/WG2_Arch/TSGS2_140e_Electronic/Docs/S2-2005379.zip S2-2005379 - KI#14, Sol#46, Removing FFS on how to determine App ID for new PFD.docx> [retrieved on 20200813]
- "3rd Generation Partnership Project; Technical Specification Group Services and System Aspects; Study on enablers for network automation for the 5G System (5GS); Phase 2 (Release 17)", no. V0.4.0, 1 July 2020 (2020-07-01), pages 1 - 186, XP051925862, Retrieved from the Internet <URL:ftp://ftp.3gpp.org/Specs/archive/23_series/23.700-91/23700-91-040.zip 23700-91-040_rm_r06.doc> [retrieved on 20200701]
- "3rd Generation Partnership Project; Technical Specification Group Services and System Aspects; Architecture enhancements for 5G System (5GS) to support network data analytics services (Release 16)", 9 September 2020 (2020-09-09), XP051935297, Retrieved from the Internet <URL:https://ftp.3gpp.org/tsg_sa/WG2_Arch/Latest_SA2_Specs/DRAFT_INTERIM/23288-g50_CRs_Implemented.zip 23288-g50_CRs_Implemented.docx> [retrieved on 20200909]

## Description

### TECHNICAL FIELD

The present invention generally relates to analytics in mobile networks, and more specifically, the invention relates to the provisioning of traffic classification rules based on analytics.

### BACKGROUND

The NWDAF (Network Data Analytics Function) provides analytics to 5GC (Fifth Generation Core) NFs (Network Functions) and OAM (Operations and Management) systems. Analytics information are either statistical information of the past events, or predictive information. Different NWDAF instances may be present in the 5GC, with possible specializations per type of analytics. The capabilities of a NWDAF instance are described in the NWDAF profile stored in the NRF (Network Repository Function). Each NWDAF instance should provide the list of Analytics Identifiers (ID) that it supports when registering to the NRF, in addition to other NRF registration elements of the NF (Network Function) profile. Other NFs requiring the discovery of an NWDAF instance that provides support for some specific type of analytics may query the NRF and include the Analytics ID(s) that identifies the desired type of analytics for that purpose. The consumers, e.g. 5GC NFs and OAM, decide how to use the data analytics provided by NWDAF.

In 5GC, the detection of applications is done by means of a set of SDF (Service Data Flow) filters, PFD (Packet Flow Descriptor) and/or an application ID. The application is detected at the User Plane using packet header matching, e.g. the packet inspection functionality available in the UPF (User Plane Function), based on the corresponding SDFs or PFDs. The UPF is provisioned with the proper SDFs and/or PFDs for example at the establishment of the data session between the User Equipment (UE) and the Data Network (DN), i.e. the PDU (Packet Data Unit) session establishment procedure in 5GC. The SDFs/PFDs can be also provisioned to the UPF in a parallel procedure, e.g. the PFD management procedures in 5GC. These PFD management procedures are typically handled by the SMF (Session Management Function) and can be of a push or pull nature. In pull procedures, the PFDs for a certain application are requested e.g. by SMF, and in push procedures the PFDs are provided in a proactive manner e.g. to SMF.

A problematic aspect is that SDFs or PFDs need to be provisioned and stored in the mobile network in advance, so only the applications of the SDFs or PFDs available at the mobile network can be classified. This represents a subset of the applications and services available in the market. Additionally, many new applications are released on the market per day and the velocity of new releases is also increasing very rapidly. These new applications cannot be classified until SDFs or PFDs are provisioned for them in the mobile network.

3GPP Change Request S2-2005379, "KI#14, Sol#46: Removing FFS on how to determine App IP for new PFD", 3GPP TSG-WG SA2 Meeting #140E e-meeting, Aug 19 - Sep 01, 2020, Elbonia, shows a PFD connected to application ID. 3GPP TR 23.700-91 v0.4.0 (2020-07-01) discloses analytics procedures related to PFD management on a per application ID basis. The patent application WO2019234481 also discloses the use of PFD in connection with application ID.

### SUMMARY

An object of the invention is to enable the provision of traffic classification rules for a mobile network in an automated manner.

A first aspect of the invention relates to a method performed by a network data analytics entity in a communications network for providing traffic classification analytics according to claim 1.

A second aspect of the invention relates to a method performed by a policy control entity in a communications network for configuring traffic marking in a User Equipment (UE) according to claim 4.

A third aspect of the invention relates to a method performed by a User Equipment (UE) in a communications network for marking traces according to claim 7.

A fourth aspect of the invention relates to a method performed by a user data repository entity in a communications network for handling Packet Flow Descriptors (PFD) according to claim 9.

Other aspects of the invention relate to mobile network nodes, particularly a network data analytics entity, a policy control entity, a User Equipment and a user data repository entity, each configured to perform the respective methods as described herein. Other aspects of the invention relate to computer program and computer program products.

In some embodiments of these aspects, the network data analytics entity is a Network Data Analytics Function (NWDAF). In some embodiments of these aspects, the policy control entity is a Policy Control Function (PCF). In some embodiments of these aspects, the user data repository entity is a User Data Repository (UDR).

Advantageously, the solution disclosed herein enables the automatized provisioning of PFDs using analytics techniques. This solution allows the network operator to detect and classify traffic for any application (known and unknown to the network operator), irrespective of the application traffic being encrypted or not.

Further advantageously, the solution disclosed herein allows the network operator to detect newly released applications, also considering their corresponding application versions and specific information pertaining to the operating systems, terminal devices and subscriber information.

Further advantageously, the solution disclosed herein allows the generation of traffic classification insights that cannot be obtained by means of existing mechanisms. These insights can be used for traffic classification purposes, as disclosed herein, or for any other purpose, e.g. for descriptive/prescriptive analytics, as data to be provided to a third party, etc.

Further advantageously, the solution disclosed herein allows the network operator to discover new applications, new application versions, new Operating Systems (OS) and new OS versions that are used over the operator's network.

Further advantageously, the solution disclosed herein allows to retrieve the distribution of OSes for a specific application. This is useful in order to know how many OSes a certain application has been deployed (e.g. a certain app is deployed both in Android and iOS, but not in Windows OS). In case a new OSId is detected for a certain application. An analytics consumer might request to trigger ML (Machine Learning) model training with the obtained labeled traces for the new OSId and application. This allows to improve traffic detection accuracy.

Further advantageously, the solution disclosed herein allows to detect different behaviors on the usage of a specific application with respect to different parameters, e.g. geographical areas (e.g. an application could be used differently in different countries, and by including the location in the traces, ML algorithms can detect these patterns) and OS (e.g. an application behavior can be different in Android and iOS, and by including the OSId in the traces, ML algorithms can detect these patterns).

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The invention may best be understood by referring to the following description and accompanying drawings that are used to illustrate particular embodiments of the invention. In the drawings:
Figure 1 is a networked system in accordance with particular embodiments of the solution described herein;
Figure 2 is a signaling diagram illustrating a procedure according to particular embodiments of the solution described herein;
Figure 3 is a signaling diagram illustrating a procedure according to particular embodiments of the solution described herein;
Figure 4 is a flowchart illustrating a method performed by a mobile network node according to particular embodiments of the solution described herein;
Figure 5 is a flowchart illustrating a method performed by a mobile network node according to particular embodiments of the solution described herein;
Figure 6 is a flowchart illustrating a method performed by a UE according to particular embodiments of the solution described herein;
Figure 7 is a flowchart illustrating a method performed by a mobile network node according to particular embodiments of the solution described herein;
Figure 8 is a block diagram of a mobile network node configured in accordance with particular embodiments of the solution described herein.
Figure 9 is a block diagram of a mobile network node configured in accordance with particular embodiments of the solution described herein.
Figure 10 is a block diagram of a mobile network node configured in accordance with particular embodiments of the solution described herein.
Figure 11 is a block diagram of a UE configured in accordance with particular embodiments of the solution described herein.

### DETAILED DESCRIPTION

The invention will now be described in detail hereinafter with reference to the accompanying drawings, in which examples of embodiments or implementations of the invention are shown. The invention may, however, be embodied or implemented in many different forms and should not be construed as limited to the embodiments set forth herein. Rather, these embodiments are provided so that this disclosure will be thorough and complete, and will fully convey the scope of present invention to those skilled in the art. It should also be noted that these embodiments are not mutually exclusive. Components from one embodiment may be tacitly assumed to be present/used in another embodiment. These embodiments of the disclosed subject matter are presented as teaching examples and are not to be construed as limiting the scope of the disclosed subject matter.

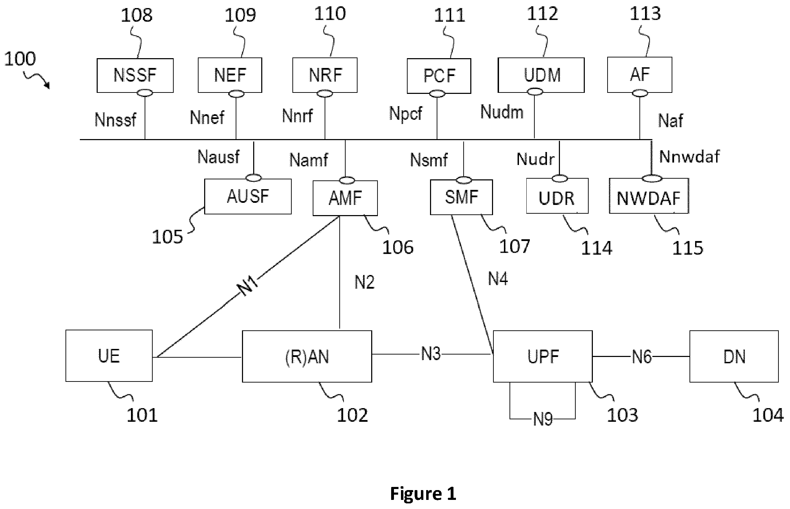

The example embodiments described herein arise in the context of a telecommunications network, also referred to as communications network in this disclosure, including but not limited to a telecommunications network that conforms to and/or otherwise incorporates aspects of a fifth generation (5G) architecture. Figure 1 is an example networked system 100 in accordance with example embodiments of the present disclosure. Figure 1 specifically illustrates User Equipment (UE) 101, which may be in communication with a (Radio) Access Network (RAN) 102 and Access and Mobility Management Function (AMF) 106 and User Plane Function (UPF) 103. The AMF 106 may, in turn, be in communication with core network services including Session Management Function (SMF) 107 and Policy Control Function (PCF) 111. The core network services may also be in communication with an Application Server/ Application Function (AS/AF) 113. Other networked services also include Network Slice Selection Function (NSSF) 108, Authentication Server Function (AUSF) 105, User Data Management (UDM) 112, Network Exposure Function (NEF) 109, Network Repository Function (NRF) 110, User Data Repository (UDR) 114, Network Data Analytics Function (NWDAF) 115 and Data Network (DN) 104. In some example implementations of embodiments of the present disclosure, an AMF 106, SMF 107, UPF 103, PCF 111, AUSF 105, NRF 110, UDM 112, NEF 109, AF 113, UDR 114, NWDAF 115, and NSSF 108 are each considered to be an NF. One or more additional instances of the network functions (NF) may be incorporated into the networked system.

The solution described herein aims to provide traffic classification rules for a mobile network in an automated manner.

To achieve such object, this disclosure provides a method performed by a network data analytics entity, a policy control entity, a User Equipment 101 and a user data repository entity. In some embodiments, the network data analytics entity is a NWDAF 115. In some embodiments, the policy control entity is a PCF 111. In some embodiments, the user data repository entity is a UDR 114.

Other entities involved in the method are a user plane entity and a session management entity. In some embodiments the user plane entity is a UPF 103. In some embodiments the session management entity is an SMF 107.

The method comprises receiving at the network data analytics entity a traffic trace together with at least one further parameter, the at least one further parameter comprising at least one of an application identifier, an application version, an operating system identifier, an operating system version, a User Equipment, UE, vendor, a UE model, a UE identifier, a subscriber identifier, and a location; determining at the network data analytics entity a Packet Flow Descriptor, PFD, that can be used to classify the traffic trace; and transmitting from the network data analytics entity to an analytics consumer entity which previously requested or subscribed to the traffic classification analytics, the PFD together with the at least one further parameter. The method may further comprise determining the PFD by means of classifying at the network data analytics entity the traffic trace into a set of traffic traces, wherein the set of traffic traces share the at least one further parameter and are classified using the PFD. In some embodiments of the method, the traffic trace together with the at least one further parameter is received from a UE, a user plane entity or a policy control entity. In some embodiments of the method, the method further comprises transmitting from the network data analytics entity to a policy control entity, a user plane entity or a UE, a request for traffic traces including an indication to report the traffic traces together with at least one further parameter, the at least one further parameter comprising at least one of an application identifier, an application version, an operating system identifier, an operating system version, a User Equipment, UE, vendor, a UE model, a UE identifier, a subscriber identifier, and a location.

The method also comprises receiving at the user data repository entity from a network data analytics entity or from a consumer entity of network data analytics, a PFD together with at least one first further parameter, the at least one first further parameter comprising at least one of an application identifier, an application version, an operating system identifier, an operating system version, a User Equipment, UE, vendor, a UE model, a UE identifier, a subscriber identifier, and a location; storing at the user data repository entity the PFD along with the at least one first further parameter; receiving at the user data repository entity from a network exposure entity, a session management entity or a policy control entity, a PFD request including at least one second further parameter, the at least one second further parameter comprising at least one of an application identifier, an application version, an operating system identifier, an operating system version, a User Equipment, UE, vendor, a UE model, a UE identifier, a subscriber identifier, and a location; and transmitting from the user data repository entity to the entity from which the PFD request was received a PFD matching the at least one second further parameter.

In this disclosure, a traffic trace refers to a portion of the user plane traffic that traverses the mobile network. This can be a single packet, or a set of packets belonging to the same flow or application. Each packet may be associated with a timestamp. A traffic trace may also include all the protocol layers and headers or only a subset of them. That is, it can be a full copy of the traffic traversing the network or some protocol headers can be removed.

This disclosure also provides mobile network nodes, particularly a network data analytics entity 800, a policy control entity 900, a user data repository entity 1000 and a UE 1100, each configured to perform the respective methods as described herein. This disclosure also provides the corresponding computer program and computer program products comprising code, for example in the form of a computer program, that when run on processing circuitry of the mobile network nodes causes the mobile network nodes to perform the disclosed methods.

Advantageously, the solution disclosed herein enables the automatized provisioning of PFDs using analytics techniques. This solution allows the network operator to detect and classify traffic for any application (known and unknown to the network operator), irrespective of the application traffic being encrypted or not.

Further advantageously, the solution disclosed herein allows the network operator to detect newly released applications, also considering their corresponding application versions and specific information pertaining to the operating systems, terminal devices and subscriber information.

Further advantageously, the solution disclosed herein allows the generation of traffic classification insights that cannot be obtained by means of existing mechanisms. These insights can be used for traffic classification purposes, as disclosed herein, or for any other purpose, e.g. for descriptive/prescriptive analytics, as data to be provided to a third party, etc.

Further advantageously, the solution disclosed herein allows the network operator to discover new applications, new application versions, new Operating Systems (OS) and new OS versions that are used over the operator's network.

Further advantageously, the solution disclosed herein allows to retrieve the distribution of OSes for a specific application. This is useful in order to know how many OSes a certain application has been deployed (e.g. a certain app is deployed both in Android and iOS, but not in Windows OS). In case a new OSld is detected for a certain application. An analytics consumer might request to trigger ML model training with the obtained labeled traces for the new OSId and application. This allows to improve traffic detection accuracy.

Further advantageously, the solution disclosed herein allows to detect different behaviors on the usage of a specific application with respect to different parameters, e.g. geographical areas (e.g. an application could be used differently in different countries, and by including the location in the traces, ML algorithms can detect these patterns) and OS (e.g. an application behavior can be different in Android and iOS, and by including the OSId in the traces, ML algorithms can detect these patterns).

Within the context of 3GPP networks, the solution disclosed herein allows to address different use cases.

A first example use case is traffic classification. In this example use case a consumer requests NWDAF to classify traffic. This allows either for UPF to classify traffic or for NWDAF itself to classify traffic. The last case allows offline classification, e.g. analytics/reporting Use Cases, where the UPF forwards the traffic to NWDAF (which has a model for traffic classification where the classification rules have been derived from the collected traces).

A second example use case is the detection of newly released application versions. In this example use case a consumer requests NWDAF for an analytic to detect newly released application versions using as input parameter a list of application identifiers (applds) and known application versions (appVersions). Then NWDAF triggers data collection, specifically labeled traffic traces for the target applds and including the corresponding appVersions. NWDAF triggers analytics processes with the obtained labeled traces, specifically to detect for each target appld if there is any appVersion which is not in the list. And finally, NWDAF provides the analytic result to the consumer (list of appVersions for each target appld, including the relative percentage of traffic for each appVersion). In case there is a new appVersion for a specific application (and the ML model has been previously trained for older AppVersions, not including the new one). The consumer might request NWDAF for ML model training with the obtained labeled traces, resulting in an improved ML model. This allows to improve traffic detection, as usually detection accuracy decreases when a new app version is deployed, especially when there is a change of protocol: e.g. from TLS to QUIC.

A third example use case is the detection of unknown applications which have a substantial presence in operator's network. In this example use case, a consumer requests NWDAF for an analytic for an ordered list of unknown applications (where unknown refers to applications which are not currently identified/detected by the network operator) and which have a substantial presence in operator's network. The input parameters are the list of known applds and a target percentage for unknown applds. NWDAF triggers data collection, specifically labeled traffic traces for any application. NWDAF triggers analytics processes with the obtained labeled traces, specifically to calculate the amount of traffic (in bytes) for each appld and obtaining an ordered list of applds which are not in the list of known applds. NWDAF provides the analytic result to the consumer, e.g. in the form of an ordered list of unknown applications which have a substantial presence in operator's network, including the relative percentage. This allows the network operator to anticipate and to offer new and/or updated packages to their subscribers (Business Intelligence). Based on this, the Consumer might trigger ML model training with the obtained labeled traces for the selected unknown applications. This allows to detect those applications (e.g. a new application which is getting popular in operator's network).

A fourth example use case is labeled traffic traces handling. In this example use case the proposed solution allows to retrieve and to send the labeled (and preferably anonymized) traffic traces to a third party. This allows the network operator to generate a new source of revenue by selling the labeled (and preferably anonymized) traffic traces to third parties. The proposed solution allows to retrieve the distribution of appVersions for a specific application. The consumer might request to remove support for the old AppVersion, e.g. resulting in the removal of the server IP addresses which served the old appVersions.

Hereinafter, drawings showing examples of embodiments of the solution are described in detail.

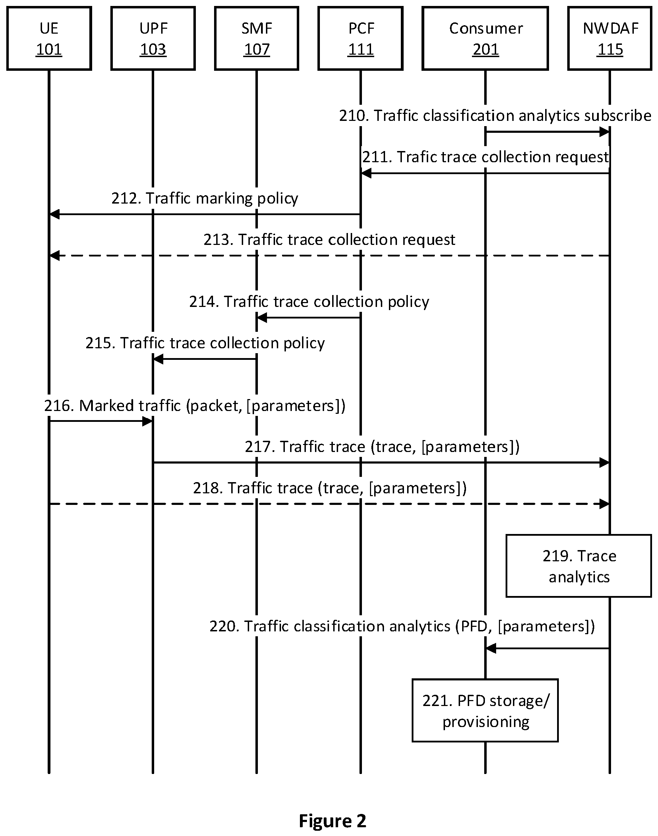

Figure 2 is a signaling diagram illustrating a procedure for provisioning Packet Flow Descriptors based on analytics. The procedure is performed by a network data analytics entity, a consumer of network data analytics, a network exposure entity, a session management entity, a user plane entity, a UE 101, and a policy control entity. In this figure, the network data analytics entity is a NWDAF 115, the policy control entity is a PCF 111, and the user plane entity is a UPF 103. The consumer of network data analytics may be a UDR 114, an Operations and Management system (OAM), or any consumer in charge of retrieving and storing the PFDs for traffic classification purposes within the mobile network.

At step 210, the NWDAF receives a subscription request for traffic classification analytics from an analytics consumer 201. The NWDAF may receive a subscription request from a UDR 114, an Operations and Management system (OAM), or any consumer in charge of retrieving and storing the PFDs for traffic classification purposes within the mobile network.

At step 211, the NWDAF triggers a traffic trace collection request to PCF. In some embodiments, the NWDAF does so by defining an event in the Npcf_EventExposure service to obtain the PFD rules for an application. This request can be triggered by NWDAF to multiple PCFs (or every PCF) in parallel.

At step 212, the PCF selects a UE or several UEs, e.g. based on a sampling value, and transmits a UE policy including a rule for traffic marking and forwards it to the UE or set of UEs. The PCF may perform this step via the AMF in a Namf_AMPolicyControl Request. The message includes:
- Rule precedence: Determines the order the rule is enforced in the UE.
- Traffic Descriptor: Determines the traffic to which the rule applies to, usually a match-all rule, which refers to all the traffic going through the UE's PDU session.
- Marking Descriptor: Determines the Marking actions, it may include:
   ∘ Optionally, a token identifier (tokenld): Indicates UE to mark with a specific tokenld (e.g. at IP Options header or DSCP) the traffic matching the following criteria. This optional tokenld indicates a specific value to include in the traffic for any of the parameters further described below. If a tokenld is not included, the traffic is marked with any one of the parameters described below. The tokenld enables the flexibility of setting a specific marking value and allows to solve potential conflicts when different applications may use the same marking parameters.
   ∘ Application identifier (appld). Three possible configurations:
      ▪ appld=list of applds (indicates UE to mark the traffic matching the applds in the list both with the tokenld and/or with the matched appld). It is also possible to include support for negative operator (e.g. to provide a list of applds and to request UE to mark the traffic for any application not in the list).
      ▪ appld=any (it indicates UE to mark the traffic with the tokenld and/or the matched appld).
      ▪ When appld is not present, it indicates UE not to mark based on the appld).
   ∘ Application version (appVersion). Three possible configurations:
      ▪ appVersion=list of appVersions (the marking only applies if the appVersion installed in the UE corresponds to any of the versions in the list).
      ▪ appVersion=any (it indicates UE to mark the traffic with the tokenld and/or with the matched appVersion).
      ▪ When appVersion is not present, it indicates UE not to mark based on the appVersion.
   ∘ OS (OSId): Three possible configurations:
      ▪ OSld=list of OSId (the marking only applies if the OS installed in the UE corresponds to any of the OS in the list, e.g. Android).
      ▪ OSld=any (it indicates UE to mark the traffic with the tokenld and/or with the OSId installed in the UE).
      ▪ When OSId is not present, it indicates UE not to mark based on the OS.
   o OS Version (OSVersion): Three possible configurations:
      ▪ OSVersion=list of OSVersion (the marking only applies if the OS Version installed in the UE corresponds to any of the OS Versions in the list, e.g. Android 10).
      ▪ OSVersion=any (it indicates UE to mark the traffic with the tokenld and/or with the OSVersion installed in the UE).
      ▪ When OSVersion is not present, it indicates UE not to mark based on the OS Version.
   o UE Vendor (UEVendor): Three possible configurations:
      ▪ UEVendor=list of UEVendor (the marking only applies if the UE Vendor corresponds to any of the UE Vendors in the list, e.g. Samsung)
      ▪ UEVendor=any (it indicates UE to mark the traffic with the tokenld and/or with the UEVendor).
      ▪ When UEVendor is not present, it indicates UE not to mark based on the UE Vendor.
   ∘ UE Model (UEModel): Three possible configurations:
      ▪ UEModel=list of UEModel (the marking only applies if the UE Model corresponds to any of the UE Models in the list, e.g. Galaxy S10)
      ▪ UEModel=any (it indicates UE to mark the traffic with the tokenld and/or with the UEModel).
      ▪ When UEModel is not present, it indicates UE not to mark based on the UE Model.
   ∘ UE ID: Three possible configurations:
      ▪ UEID=list of UEID or UE group (the marking only applies if the UEID corresponds to any of the UEIDs in the list or UE group)
      ▪ UEID=any (it indicates UE to mark the traffic with the tokenld and/or with the UEID).
      ▪ When UEID is not present, it indicates UE not to mark based on the UEID.
   ∘ PEI (Permanent Equipment Identifier)/IMEI (International Mobile Equipment Identity): Three possible configurations:
      ▪ PEI=list of PEI (the marking only applies if the PEI corresponds to any of the PEI in the list)
      ▪ PEl=any (it indicates UE to mark the traffic with the tokenld and/or with the PEI).
      ▪ When PEI is not present, it indicates UE not to mark based on the PEI.
   ∘ Location (location): Three possible configurations:
      ▪ location (the marking only applies if the UEs location matches with the requested location).
      ▪ location=any (it indicates UE to mark the traffic with the tokenld and/or with the UE's location).
      ▪ When location is not present, it indicates UE not to mark based on the UE's location.

This message may be sent via the AMF serving the UE. In this case, the AMF transparently forwards to the UE 101 the above UE Policy in a N1 AMPolicyControl Request message.

When the UE 101 receives the above information, the UE stores the UE Policy and answers back to AMF/PCF with a N1 AMPolicyControl Response message.

At step 213, as an alternative, the NWDAF may also trigger the traffic trace collection directly to the UE 101 including the same parameters as in steps 211 and 212.

At step 214, PCF triggers a PCC rule to the SMF including steering information of traffic towards the NWDAF. The PCC rule includes the traffic filter information and steering information indicating to route the traffic or a copy of the traffic towards the NWDAF. The traffic filter information may include any one of an application identifier, an application version, an operating system identifier, an operating system version, a User Equipment, UE, vendor, a UE model, a UE identifier, a subscriber identifier, and a location.

At step 215, the SMF transmits to the UPF the corresponding traffic steering rule including the traffic filter or Packet Detection Rule (PDR) including any one of an application identifier, an application version, an operating system identifier, an operating system version, a User Equipment, UE, vendor, a UE model, a UE identifier, a subscriber identifier, and a location; and a Forwarding Action Rule (FAR) indicating the forward or duplicate action and corresponding routing towards the NWDAF.

Optionally, the NWDAF may trigger direct traffic trace collection to UPF by requesting the Nupf_EventExposure service exposed by UPF and transmitting a subscribe request to UPF including as parameters the ones included in step 214.

At step 216, when the UE detects traffic from an application as specified in the Marking Descriptor, the UE marks the traffic accordingly with the corresponding parameters, which may be any one of an application identifier, an application version, an operating system identifier, an operating system version, a User Equipment, UE, vendor, a UE model, a UE identifier, a subscriber identifier, and a location.

At step 217, the UPF detects the marked traffic and forwards it to the NWDAF, including the same parameters as in step 216.

Step 218 shows the option in which the UE, in response to the traffic trace collection request of step 213, sends the marked traffic trace directly to the NWDAF, including the same parameters as in step 216.

At step 219, the NWDAF analyses the collected traffic trace and generates the analytics results. To that end, the NWDAF classifies together the traffic traces that share the marking information (i.e. an application identifier, an application version, an operating system identifier, an operating system version, a User Equipment, UE, vendor, a UE model, a UE identifier, a subscriber identifier, and a location), and can be classified using a same Packet Flow Descriptor, PFD. In order to do that, the NWDAF can use ML algorithms such as clustering, decision trees, support vector machines, etc. The result of the classification, i.e. the analytics result, are the clusters comprising the marking information and the PFD. In this step, the NWDAF determines the PFD by means of classifying the traffic trace into a set of traffic traces, wherein the set of traffic traces share the at least one further parameter and are classified using the PFD. The generation of the analytic result is not necessarily in response to the reception of a traffic trace. Traffic traces can be received and analyzed without producing an analytics result (i.e. PFD).

At step 220, the NWDAF transmits the PFD together with the parameters of the marking information (i.e. an application identifier, an application version, an operating system identifier, an operating system version, a User Equipment, UE, vendor, a UE model, a UE identifier, a subscriber identifier, and a location) to the analytics consumer 201. The analytics consumer 201 may be a UDR and the information can be transmitted for example as Application Data, by triggering a Nudr_DataManagement_Store request message including an indication of the DataSet (e.g. ApplicationData).

In some embodiments, the NWDAF sends the PFD to the NEF, so the NEF stores the PFD data for the application ID in UDR as Application Data, along with the other parameters (i.e. an application identifier, an application version, an operating system identifier, an operating system version, a User Equipment, UE, vendor, a UE model, a UE identifier, a subscriber identifier, and a location).

At step 221, the PFD together with the associated parameters (i.e. an application identifier, an application version, an operating system identifier, an operating system version, a User Equipment, UE, vendor, a UE model, a UE identifier, a subscriber identifier, and a location) is stored in the mobile network. They can be stored in UDR (e.g. as Application Data).

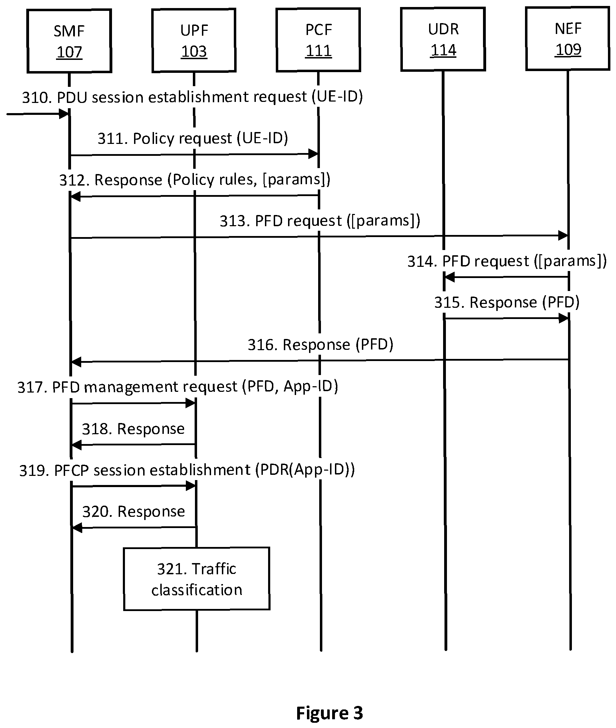

Figure 3 is a signaling diagram illustrating a procedure for provisioning PFDs. The procedure is performed by a network exposure entity, a session management entity, a user plane entity, a user data repository entity and a policy control entity. In this figure, the policy control entity is a PCF 111, the user data repository entity is a UDR 114, the network exposure entity is a NEF 109, the session management entity is a SMF 107, and the user plane entity is a UPF 103. Prior to the execution of this procedure it is assumed that the procedure shown in Figure 2 has taken place and the PFD together with the corresponding parameters (i.e. an application identifier, an application version, an operating system identifier, an operating system version, a User Equipment, UE, vendor, a UE model, a UE identifier, a subscriber identifier, and a location) has been stored in the UDR.

At step 310, the SMF receives a PDU session establishment request for a UE-ID.

At step 311, the SMF requests the SM policy association to PCF including the User-ID.

At step 312, PCF responds with the PCC rules, specifically a PCC rule for an App-ID. The PCF may include further parameters (i.e. an application version, an operating system identifier, an operating system version, a User Equipment, UE, vendor, a UE model, a UE identifier, a subscriber identifier, and a location) associated with the PCC rules that are later used in the following step.

At step 313, SMF invokes the PFD management service in NEF including at least one further parameter. The at least one further parameter can be one of an application identifier, an application version, an operating system identifier, an operating system version, a User Equipment, UE, vendor, a UE model, a UE identifier, a subscriber identifier, and a location.

At step 314, the NEF requests the PFD information to the UDR for the at least one further parameter (including the App-ID).

At step 315, the UDR looks for the PFD set matching the application ID and the at least one further parameter and sends the matching PFDs to the NEF.

At step 316, NEF responds to SMF with the matching PFDs.

At step 317, SMF triggers N4 PFD Management request towards UPF including the PFDs for the application ID.

At step 318, UPF acks the N4 PFD Management request.

At step 319, SMF establishes the N4 session for the user with UPF including the PDRs (Packet Detection Rules) for the App-ID.

At step 320, UPF acks the N4 session establishment.

At step 321, UPF uses the received PFDs for the application ID to classify the traffic into the corresponding App-ID.

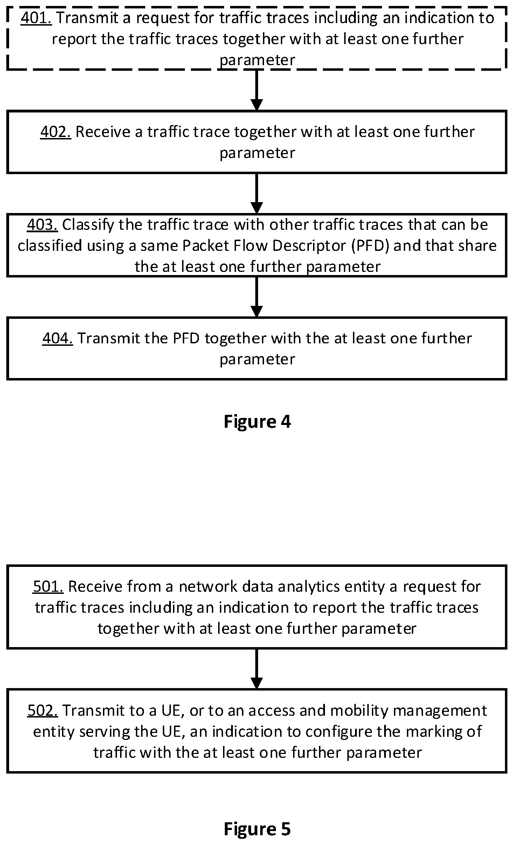

Figure 4 is a flowchart illustrating a method performed by a network data analytics entity for provisioning Packet Flow Descriptors. In some embodiments, the network data analytics entity is a NWDAF 115.

At step 401, the network data analytics entity transmits a request for traffic traces including an indication to report the traffic traces together with at least one further parameter. The at least one further parameter can be one of an application identifier, an application version, an operating system identifier, an operating system version, a User Equipment, UE, vendor, a UE model, a UE identifier, a subscriber identifier, and a location.

At step 402 the network data analytics entity receives a traffic trace together with at least one further parameter.

At step 403 the network data analytics entity classifies the traffic trace with other traffic traces that can be classified using a same Packet Flow Descriptor (PFD) and that share the same at least one further parameter.

At step 404 the network data analytics entity transmits the PFD together with the at least one further parameter.

Figure 5 is a flowchart illustrating a method performed by a policy control entity for configuring Packet Flow Descriptor reporting in a User Equipment. In some embodiments, the policy control entity is a PCF 111.

At step 501, the policy control entity receives from a network data analytics entity a request for traffic traces including an indication to report the traffic traces together with at least one further parameter. The at least one further parameter can be one of an application identifier, an application version, an operating system identifier, an operating system version, a User Equipment, UE, vendor, a UE model, a UE identifier, a subscriber identifier, and a location.

At step 502, the policy control entity transmits to a UE, or to an access and mobility management entity serving the UE, an indication to configure the marking of traffic with the at least one further parameter.

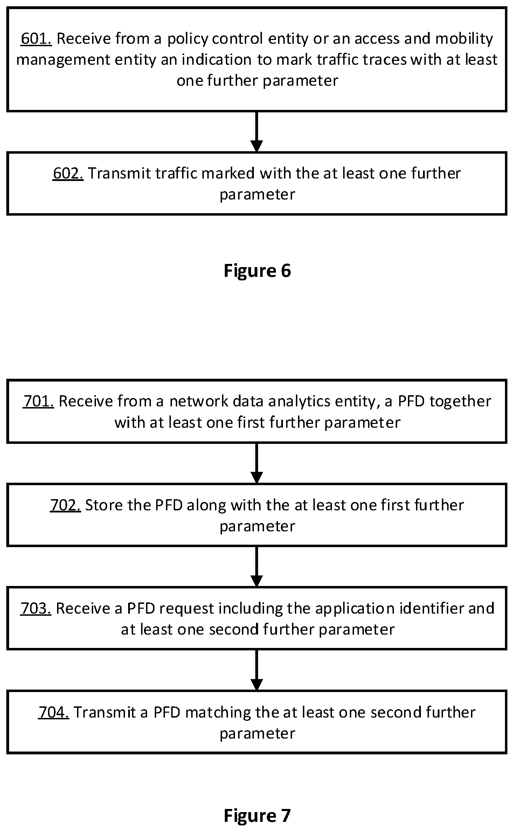

Figure 6 is a flowchart illustrating a method performed by a UE for transmitting marked traffic.

At step 601, the UE receives from a policy control entity or an access and mobility management entity an indication to mark traffic traces with at least one further parameter. The at least one further parameter can be one of an application identifier, an application version, an operating system identifier, an operating system version, a User Equipment, UE, vendor, a UE model, a UE identifier, a subscriber identifier, and a location.

At step 602, the UE transmits traffic marked with the at least one further parameter.

Figure 7 is a flowchart illustrating a method performed by a user data repository entity for handling Packet Flow Descriptors. In some embodiments, the user data repository entity is a UDR 114.

At step 701, the user data repository entity receives from a network data analytics entity, a PFD together with at least one first further parameter. The at least one first further parameter can be one of an application identifier, an application version, an operating system identifier, an operating system version, a User Equipment, UE, vendor, a UE model, a UE identifier, a subscriber identifier, and a location.

At step 702, the user data repository entity stores the PFD along with the at least one first further parameter.

At step 703, the user data repository entity receives a PFD request including the application identifier and at least one second further parameter. The at least one second further parameter can be one of an application identifier, an application version, an operating system identifier, an operating system version, a User Equipment, UE, vendor, a UE model, a UE identifier, a subscriber identifier, and a location.

At step 704, the user data repository entity transmits a PFD matching the at least one second further parameter.

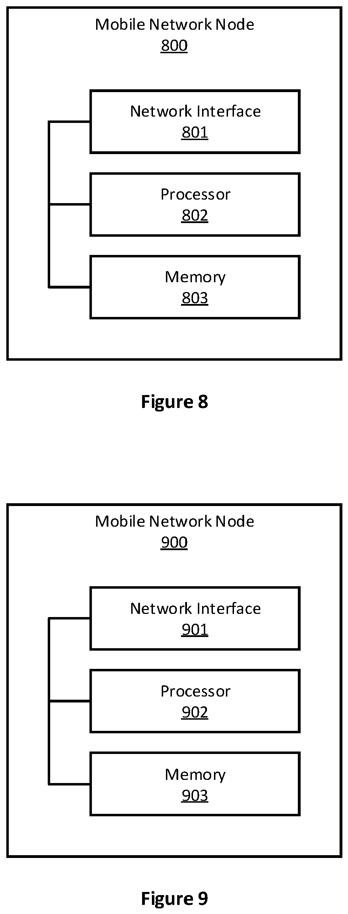

Figure 8 is a block diagram illustrating elements of a mobile network node 800 of a mobile communications network. In some embodiments, the mobile network node 800 is a network data analytics entity. In some embodiments, the mobile network node 800 is a NWDAF 115. As shown, the mobile network node may include network interface circuitry 801 (also referred to as a network interface) configured to provide communications with other nodes of the core network and/or the network. The mobile network node may also include a processing circuitry 802 (also referred to as a processor) coupled to the network interface circuitry, and memory circuitry 803 (also referred to as memory) coupled to the processing circuitry. The memory circuitry 803 may include computer readable program code that when executed by the processing circuitry 802 causes the processing circuitry to perform operations according to embodiments disclosed herein. According to other embodiments, processing circuitry 802 may be defined to include memory so that a separate memory circuitry is not required. As discussed herein, operations of the mobile network node may be performed by processing circuitry 802 and/or network interface circuitry 801. For example, processing circuitry 802 may control network interface circuitry 801 to transmit communications through network interface circuitry 801 to one or more other network nodes and/or to receive communications through network interface circuitry from one or more other network nodes. Moreover, modules may be stored in memory 803, and these modules may provide instructions so that when instructions of a module are executed by processing circuitry 802, processing circuitry 802 performs respective operations (e.g., operations discussed below with respect to Example Embodiments relating to core network nodes).

Figure 9 is a block diagram illustrating elements of a mobile network node 900 of a mobile communications network. In some embodiments, the mobile network node 900 is a policy control entity. In some embodiments, the mobile network node 900 is a PCF 111. As shown, the mobile network node may include network interface circuitry 901 (also referred to as a network interface) configured to provide communications with other nodes of the core network and/or the network. The mobile network node may also include a processing circuitry 902 (also referred to as a processor) coupled to the network interface circuitry, and memory circuitry 903 (also referred to as memory) coupled to the processing circuitry. The memory circuitry 903 may include computer readable program code that when executed by the processing circuitry 902 causes the processing circuitry to perform operations according to embodiments disclosed herein. According to other embodiments, processing circuitry 902 may be defined to include memory so that a separate memory circuitry is not required. As discussed herein, operations of the mobile network node may be performed by processing circuitry 902 and/or network interface circuitry 901. For example, processing circuitry 902 may control network interface circuitry 901 to transmit communications through network interface circuitry 901 to one or more other network nodes and/or to receive communications through network interface circuitry from one or more other network nodes. Moreover, modules may be stored in memory 903, and these modules may provide instructions so that when instructions of a module are executed by processing circuitry 902, processing circuitry 902 performs respective operations (e.g., operations discussed below with respect to Example Embodiments relating to core network nodes).

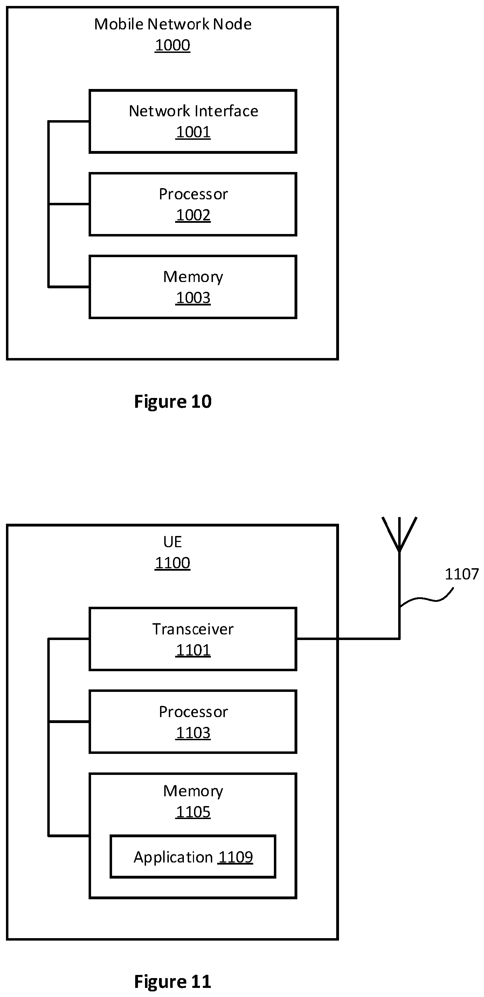

Figure 10 is a block diagram illustrating elements of a mobile network node 1000 of a mobile communications network. In some embodiments, the mobile network node 1000 is a user data repository entity. In some embodiments, the mobile network node 1000 is a UDR 114.

As shown, the mobile network node may include network interface circuitry 1001 (also referred to as a network interface) configured to provide communications with other nodes of the core network and/or the network. The mobile network node may also include a processing circuitry 1002 (also referred to as a processor) coupled to the network interface circuitry, and memory circuitry 1003 (also referred to as memory) coupled to the processing circuitry. The memory circuitry 1003 may include computer readable program code that when executed by the processing circuitry 1002 causes the processing circuitry to perform operations according to embodiments disclosed herein. According to other embodiments, processing circuitry 1002 may be defined to include memory so that a separate memory circuitry is not required. As discussed herein, operations of the mobile network node may be performed by processing circuitry 1002 and/or network interface circuitry 1001. For example, processing circuitry 1002 may control network interface circuitry 1001 to transmit communications through network interface circuitry 1001 to one or more other network nodes and/or to receive communications through network interface circuitry from one or more other network nodes. Moreover, modules may be stored in memory 1003, and these modules may provide instructions so that when instructions of a module are executed by processing circuitry 1002, processing circuitry 1002 performs respective operations (e.g., operations discussed below with respect to Example Embodiments relating to core network nodes).

Figure 11 is a block diagram illustrating elements of a User Equipment (UE) 1100 (also referred to as a communication device, a mobile terminal, a mobile communication terminal, a wireless device, a wireless communication device, a wireless terminal, mobile device, a wireless communication terminal, a user equipment node/terminal/device, etc.) configured to provide wireless communication according to embodiments of the disclosure. As shown, communication device UE may include an antenna 1107, and transceiver circuitry 1101 (also referred to as a transceiver) including a transmitter and a receiver configured to provide uplink and downlink radio communications with a base station(s) (also referred to as a RAN node) of a radio access network. The UE may also include processing circuitry 1103 (also referred to as a processor) coupled to the transceiver circuitry, and memory circuitry 1105 (also referred to as memory, e.g. corresponding to device readable medium) coupled to the processing circuitry. The memory circuitry 1105 may include computer readable program code, such as application client 1109, that when executed by the processing circuitry 1103 causes the processing circuitry to perform operations according to embodiments disclosed herein. According to other embodiments, processing circuitry 1103 may be defined to include memory so that separate memory circuitry is not required. The UE 1100 may also include an interface (such as a user interface) coupled with processing circuitry 1103, and/or the UE may be incorporated in a vehicle. As discussed herein, operations of the UE may be performed by processing circuitry 1103 and/or transceiver circuitry 1101. For example, processing circuitry 1103 may control transceiver circuitry 1101 to transmit communications through transceiver circuitry 1101 over a radio interface to a radio access network node (also referred to as a base station) and/or to receive communications through transceiver circuitry 1101 from a RAN node over a radio interface. Moreover, modules may be stored in memory circuitry 1105, and these modules may provide instructions so that when instructions of a module are executed by processing circuitry 1103, processing circuitry 1103 performs respective operations (e.g., the operations disclosed herein with respect to the example embodiments relating to the UE).

## Claims

1. A method performed by a network data analytics entity in a communications network for providing traffic classification analytics, the method comprising:
transmitting (211, 213) to a policy control entity, a user plane entity or a UE, a request for traffic trace packet or packets including an indication to report the traffic trace packet or packets together with at least one further parameter, the at least one further parameter comprising at least one of an operating system identifier, an operating system version, a User Equipment, UE, vendor, a UE model, a UE identifier, a subscriber identifier, and a location;
receiving (217, 218) from a UE, a user plane entity or a policy control entity a traffic trace packet or packets together with at least one further parameter, the at least one further parameter comprising at least one of an operating system identifier, an operating system version, a User Equipment, UE, vendor, a UE model, a UE identifier, a subscriber identifier, and a location;
determining (219) a Packet Flow Descriptor, PFD, that can be used to classify the traffic trace packet or packets; and
transmitting (220) to an analytics consumer entity which previously requested or subscribed to the traffic classification analytics, the PFD together with the at least one further parameter.

2. The method of claim 1 further comprising:
classifying (219) the traffic trace packet or packets into a set of traffic traces, wherein the set of traffic traces share the at least one further parameter and are classified using the PFD.

3. The method of any one of claims 1 to 2, wherein the analytics consumer entity is a user data repository entity, a policy control entity or an operations and management system.

4. A method performed by a policy control entity in a communications network for configuring traffic marking in a User Equipment, UE, the method comprising:
receiving (211) from a network data analytics entity a request for traffic trace packet or packets including an indication to report the traffic trace packet or packets together with at least one further parameter, the at least one further parameter comprising at least one of an operating system identifier, an operating system version, a User Equipment, UE, vendor, a UE model, a UE identifier, a subscriber identifier, and a location; and
transmitting (212) to the UE, or to an access and mobility management entity serving the UE, an indication to configure marking of traffic trace packet or packets with the at least one further parameter to enable the generation of traffic trace packet or packets based on the marked traffic trace packet or packets.

5. The method of claim 4, wherein the request for traffic trace packet or packets and the indication to configure the marking of traffic trace packet or packets further comprise one of a network data analytics entity identifier or a network data analytics entity address, and wherein the traffic trace packet or packets together with the at least one further parameter are transmitted towards the network data analytics entity.

6. The method of claim 4, further comprising:
transmitting (214) to a user plane entity or to a session management entity serving the user plane entity, an indication to transmit to the network data analytics entity the trace packet or packets marked with at least one further parameter, the at least one further parameter comprising at least one of an operating system identifier, an operating system version, a User Equipment, UE, vendor, a UE model, a UE identifier, a subscriber identifier, and a location.

7. A method performed by a User Equipment, UE, in a communications network for marking traces, the method comprising:
receiving (212, 213) from a policy control entity or an access and mobility management entity an indication to mark traffic trace packet or packets with at least one further parameter, the at least one further parameter comprising at least one of an operating system identifier, an operating system version, a User Equipment, UE, vendor, a UE model, a UE identifier, a subscriber identifier, and a location; and
transmitting (216) traffic trace packet or packets marked with the at least one further parameter to the network data analytics entity.

8. The method of claim 7, wherein the indication to mark traffic trace packet or packets further comprises one of a network data analytics entity identifier or a network data analytics entity address.

9. A method performed by a user data repository entity in a communications network for handling Packet Flow Descriptors, PFD, the method comprising:
requesting or subscribing to traffic classification analytics at a network data analytics entity;
receiving (220) from the network data analytics entity or from a analytics consumer entity of network data analytics, a PFD together with at least one first further parameter, the at least one first further parameter comprising at least one of an operating system identifier, an operating system version, a User Equipment, UE, vendor, a UE model, a UE identifier, a subscriber identifier, and a location;
storing (221) the PFD along with the at least one first further parameter;
receiving (314) from a network exposure entity, a session management entity or a policy control entity, a PFD request including at least one second further parameter, the at least one second further parameter comprising at least one of an operating system identifier, an operating system version, a User Equipment, UE, vendor, a UE model, a UE identifier, a subscriber identifier, and a location; and
transmitting (315) to the entity from which the PFD request was received a PFD together with the at least one first further parameter matching the at least one second further parameter.

10. A network data analytics entity configured to perform the method of any one of claims 1 to 3.

11. A policy control entity configured to perform the method of any one of claims 4 to 6.

12. A User Equipment, UE, configured to perform the method of any one of claims 7 to 8.

13. A user data repository entity configured to perform the method of claim 9.

## Patentansprüche

1. Verfahren, das von einer Netzwerkdatenanalyse-Entität in einem Kommunikationsnetzwerk durchgeführt wird, zur Bereitstellung einer Verkehrsklassifizierungsanalyse, wobei das Verfahren Folgendes umfasst:
Senden (211, 213) einer Anforderung für ein oder mehrere Verkehrsverfolgungspakete, die eine Anweisung umfasst, das eine oder die mehreren Verkehrsverfolgungspakete zusammen mit mindestens einem weiteren Parameter zu melden, an eine Richtlinienkontrollentität, eine Benutzerebenen-Entität oder eine UE, wobei der mindestens eine weitere Parameter mindestens eines von einer Betriebssystemkennung, einer Betriebssystemversion, einem Benutzereinrichtungsanbieter, UE-Anbieter, einem UE-Modell, einer UE-Kennung, einer Teilnehmerkennung und einem Standort umfasst;
Empfangen (217, 218) eines oder mehrerer Verkehrsverfolgungspakete zusammen mit mindestens einem weiteren Parameter von einer UE, einer Benutzerebenen-Entität oder einer Richtlinienkontrollentität, wobei der mindestens eine weitere Parameter mindestens eines von einer Betriebssystemkennung, einer Betriebssystemversion, einem Benutzereinrichtungsanbieter, UE-Anbieter, einem UE-Modell, einer UE-Kennung, einer Teilnehmerkennung und einem Standort umfasst;
Bestimmen (219) eines Paketflussdeskriptors, PFD, der verwendet werden kann, um das eine oder die mehreren Verkehrsverfolgungspakete zu klassifizieren; und
Senden (220) des PDF zusammen mit dem mindestens einen weiteren Parameter an eine Analyse-Verbraucherentität, die die Verkehrsklassifizierungsanalyse vorher angefordert oder abonniert hat.

2. Verfahren nach Anspruch 1, ferner umfassend:
Klassifizieren (219) des einen oder der mehreren Verkehrsverfolgungspakete in einen Verkehrsverfolgungssatz, wobei der Verkehrsverfolgungssatz den mindestens einen weiteren Parameter gemeinsam nutzt und unter Verwendung des PFD klassifiziert wird.

3. Verfahren nach einem der Ansprüche 1 bis 2, wobei die Analyse-Verbraucherentität eine Benutzerdatenrepository-Entität, eine Richtlinienkontrollentität oder ein Betriebs- und Verwaltungssystem ist.

4. Verfahren, das von einer Richtlinienkontrollentität in einem Kommunikationsnetzwerk durchgeführt wird, zum Konfigurieren einer Verkehrsmarkierung in einer Benutzereinrichtung, UE, wobei das Verfahren Folgendes umfasst:
Empfangen (211) einer Anforderung für ein oder mehrere Verkehrsverfolgungspakete, die eine Anweisung umfasst, das eine oder die mehreren Verkehrsverfolgungspakete zusammen mit mindestens einem weiteren Parameter zu melden, von einer Netzwerkdatenanalyse-Entität, wobei der mindestens eine weitere Parameter mindestens eines von einer Betriebssystemkennung, einer Betriebssystemversion, einem Benutzereinrichtungsanbieter, UE-Anbieter, einem UE-Modell, einer UE-Kennung, einer Teilnehmerkennung und einem Standort umfasst; und
Senden (212) einer Anweisung, die Markierung eines oder mehrerer Verkehrsverfolgungspakete mit dem mindestens einen weiteren Parameter zu konfigurieren, um die Erzeugung eines oder mehrerer Verkehrsverfolgungspakete basierend auf dem einen oder den mehreren markierten Verkehrsverfolgungspaketen zu ermöglichen, an die UE oder an eine Zugangs- und Mobilitätsverwaltungsentität, die die UE bedient.

5. Verfahren nach Anspruch 4, wobei die Anforderung für ein oder mehrere Verkehrsverfolgungspakete und die Anweisung, die Markierung eines oder mehrerer Verkehrsverfolgungspakete zu konfigurieren, ferner eine von einer Kennung der Netzwerkdatenanalyse-Entität oder einer Adresse der Netzwerkdatenanalyse-Entität umfassen und wobei das eine oder die mehreren Verkehrsverfolgungspakete zusammen mit dem mindestens einen weiteren Parameter an die Netzwerkdatenanalyse-Entität gesendet werden.

6. Verfahren nach Anspruch 4, ferner umfassend:
Senden (214) einer Anweisung, das eine oder die mehreren mit dem mindestens einen weiteren Parameter markierten Verkehrsverfolgungspakete an die Netzwerkdatenanalyse-Entität zu senden, an eine Benutzerebenen-Entität oder an eine Sitzungsverwaltungsentität, die die Benutzerebenen-Entität bedient, wobei der mindestens eine weitere Parameter mindestens eines von einer Betriebssystemkennung, einer Betriebssystemversion, einem Benutzereinrichtungsanbieter, UE-Anbieter, einem UE-Modell, einer UE-Kennung, einer Teilnehmerkennung und einem Standort umfasst.

7. Verfahren zur Markierung von Verfolgungen, das von einer Benutzereinrichtung, UE, in einem Kommunikationsnetzwerk durchgeführt wird, wobei das Verfahren Folgendes umfasst:
Empfangen (212, 213) einer Anweisung, ein oder mehrere Verkehrsverfolgungspakete mit mindestens einem weiteren Parameter zu markieren, von einer Richtlinienkontrollentität oder einer Zugangs- und Mobilitätsverwaltungsentität, wobei der mindestens eine weitere Parameter mindestens eines von einer Betriebssystemkennung, einer Betriebssystemversion, einem Benutzereinrichtungsanbieter, UE-Anbieter, einem UE-Modell, einer UE-Kennung, einer Teilnehmerkennung und einem Standort umfasst; und
Senden (216) eines oder mehrerer mit dem mindestens einen weiteren Parameter markierter Verkehrsverfolgungspakete an die Netzwerkdatenanalyse-Entität.

8. Verfahren nach Anspruch 7, wobei die Anweisung, eine oder mehrere Verkehrsverfolgungspakete zu markieren, eine von einer Kennung der Netzwerkdatenanalyse-Entität oder einer Adresse der Netzwerkanalyse-Entität umfasst.

9. Verfahren, das von einer Benutzerdatenrepository-Entität in einem Kommunikationsnetzwerk durchgeführt wird, zur Handhabung von Paketflussdeskriptoren, PFD, wobei das Verfahren Folgendes umfasst:
Anfordern oder Abonnieren von Verkehrsklassifizierungsanalyse bei einer Netzwerkdatenanalyse-Entität;
Empfangen (220) eines PFD zusammen mit mindestens einem ersten weiteren Parameter von der Netzwerkdatenanalyse-Entität oder von einer Analyse-Verbraucherentität zur Netzwerkdatenanalyse, wobei der mindestens eine erste weitere Parameter mindestens eines von einer Betriebssystemkennung, einer Betriebssystemversion, einem Benutzereinrichtungsanbieter, UE-Anbieter, einem UE-Modell, einer UE-Kennung, einer Teilnehmerkennung und einem Standort umfasst;
Speichern (221) des PFD zusammen mit dem mindestens einen ersten weiteren Parameter;
Empfangen (314) einer PFD-Anforderung, die mindestens einen zweiten weiteren Parameter umfasst, von einer Netzwerkdarlegungsentität, einer Sitzungsverwaltungsentität oder einer Richtlinienkontrollentität, wobei der mindestens eine zweite weitere Parameter mindestens eines von einer Betriebssystemkennung, einer Betriebssystemversion, einem Benutzereinrichtungsanbieter, UE-Anbieter, einem UE-Modell, einer UE-Kennung, einer Teilnehmerkennung und einem Standort umfasst; und
Senden (315) eines PFD zusammen mit dem mindestens einen ersten weiteren Parameter, der mit dem mindestens einen zweiten weiteren Parameter übereinstimmt, an die Entität, von der die PFD-Anforderung empfangen wurde.

10. Netzwerkdatenanalyse-Entität, die zum Durchführen des Verfahrens nach einem der Ansprüche 1 bis 3 konfiguriert ist.

11. Richtlinienkontrollentität, die zum Durchführen des Verfahrens nach einem der Ansprüche 4 bis 6 konfiguriert ist.

12. Benutzereinrichtung, UE, die zum Durchführen des Verfahrens nach einem der Ansprüche 7 bis 8 konfiguriert ist.

13. Benutzerdatenrepository-Entität, die zum Durchführen des Verfahrens nach Anspruch 9 konfiguriert ist.

## Revendications

1. Procédé réalisé par une entité d'analyse de données de réseau dans un réseau de communication pour fournir des analyses de classification de trafic, le procédé comprenant :
la transmission (211, 213), à une entité de commande de politique, à une entité de plan utilisateur ou à un UE, d'une demande d'un paquet ou de paquets de suivi de trafic incluant une indication de rapporter le paquet ou les paquets de suivi de trafic avec au moins un autre paramètre, l'au moins un autre paramètre comprenant au moins l'un parmi un identifiant de système d'exploitation, une version de système d'exploitation, un fournisseur d'équipement utilisateur, UE, un modèle d'UE, un identifiant d'UE, un identifiant d'abonné et un emplacement ;
la réception (217, 218), depuis un UE, depuis une entité de plan utilisateur ou depuis une entité de commande de politique, d'un paquet ou de paquets de suivi de trafic avec au moins un autre paramètre, l'au moins un autre paramètre comprenant au moins l'un parmi un identifiant de système d'exploitation, une version de système d'exploitation, un fournisseur d'équipement utilisateur, UE, un modèle d'UE, un identifiant d'UE, un identifiant d'abonné, et un emplacement ;
la détermination (219) d'un descripteur de flux de paquets, PFD, qui peut être utilisé pour classer le paquet ou les paquets de suivi de trafic ; et
la transmission (220), à une entité de consommation d'analyses qui a préalablement demandé les analyses de classification de trafic ou s'y est abonnée, du PFD avec l'au moins un autre paramètre.

2. Procédé selon la revendication 1, comprenant en outre : la classification (219) du paquet ou des paquets de suivi de trafic dans un ensemble de suivis de trafic, dans lequel l'ensemble de suivis de trafic partage l'au moins un autre paramètre et est classé en utilisant le PFD.

3. Procédé selon l'une quelconque des revendications 1 à 2, dans lequel l'entité de consommation d'analyses est une entité de référentiel de données d'utilisateur, une entité de commande de politique ou un système d'exploitation et de gestion.

4. Procédé réalisé par une entité de commande de politique dans un réseau de communication pour configurer un marquage de trafic dans un équipement utilisateur, UE, le procédé comprenant :
la réception (211), depuis une entité d'analyse de données de réseau, d'une demande d'un paquet ou de paquets de suivi de trafic incluant une indication de rapporter le paquet ou les paquets de suivi de trafic avec au moins un autre paramètre, l'au moins un autre paramètre comprenant au moins l'un parmi un identifiant de système d'exploitation, une version de système d'exploitation, un fournisseur d'équipement utilisateur, UE, un modèle d'UE, un identifiant d'UE, un identifiant d'abonné et un emplacement ; et
la transmission (212), à l'UE ou à une entité de gestion d'accès et de mobilité desservant l'UE, d'une indication de configurer un marquage de paquet ou de paquets de suivi de trafic avec l'au moins un autre paramètre pour permettre la génération du paquet ou des paquets de suivi de trafic sur la base du paquet ou des paquets de suivi de trafic marqué.

5. Procédé selon la revendication 4, dans lequel la demande d'un paquet ou de paquets de suivi de trafic et l'indication de configurer le marquage du paquet ou des paquets de suivi de trafic comprend en outre l'un parmi un identifiant d'entité d'analyse de données de réseau et une adresse d'entité d'analyse de données de réseau, et dans lequel le paquet ou les paquets de suivi de trafic avec l'au moins un autre paramètre sont transmis vers l'entité d'analyse de données de réseau.

6. Procédé selon la revendication 4, comprenant en outre : la transmission (214), à une entité de plan utilisateur ou à une entité de gestion de session desservant l'entité de plan utilisateur, d'une indication de transmettre, à l'entité d'analyse de données de réseau, le paquet ou les paquets de suivi marqués avec au moins un autre paramètre, l'au moins un autre paramètre comprenant au moins l'un parmi un identifiant de système d'exploitation, une version de système d'exploitation, un fournisseur d'équipement utilisateur, UE, un modèle d'UE, un identifiant d'UE, un identifiant d'abonné, et un emplacement.

7. Procédé réalisé par un équipement utilisateur, UE, dans un réseau de communication pour le marquage de suivi, le procédé comprenant :
la réception (212, 213), depuis une entité de commande de politique ou depuis une entité de gestion d'accès et de mobilité, d'une indication de marquer un paquet ou des paquets de suivi de trafic avec au moins un autre paramètre, l'au moins un autre paramètre comprenant au moins l'un parmi un identifiant de système d'exploitation, une version de système d'exploitation, un fournisseur d'équipement utilisateur, UE, un modèle d'UE, un identifiant d'UE, un identifiant d'abonné et un emplacement ; et
la transmission (216) d'un paquet ou de paquets de suivi de trafic marqués avec l'au moins un autre paramètre à l'entité d'analyse de données de réseau.

8. Procédé selon la revendication 7, dans lequel l'indication de marquer un paquet ou des paquets de suivi de trafic comprend en outre l'un parmi un identifiant d'entité d'analyse de données de réseau et une adresse d'entité d'analyse de données de réseau.

9. Procédé réalisé par une entité de référentiel de données d'utilisateur dans un réseau de communication pour gérer des descripteurs de flux de paquets, PFD, le procédé comprenant :
la demande d'analyses de classification de trafic ou l'abonnement à celles-ci au niveau d'une entité d'analyse de données de réseau ;
la réception (220), depuis l'entité d'analyse de données de réseau ou depuis une entité de consommation d'analyse d'analyses de données de réseau, d'un PFD avec au moins un premier autre paramètre, l'au moins un premier autre paramètre comprenant au moins l'un parmi un identifiant de système d'exploitation, une version de système d'exploitation, un fournisseur d'équipement utilisateur, UE, un modèle d'UE, un identifiant d'UE, un identifiant d'abonné et un emplacement ;
le stockage (221) du PFD avec l'au moins un premier autre paramètre ;
la réception (314), depuis une entité d'exposition de réseau, depuis une entité de gestion de session ou depuis une entité de commande de politique, d'une demande de PFD incluant au moins un deuxième autre paramètre, l'au moins un deuxième autre paramètre comprenant au moins l'un parmi l'un parmi un identifiant de système d'exploitation, une version de système d'exploitation, un fournisseur d'équipement utilisateur, UE, un modèle d'UE, un identifiant d'UE, un identifiant d'abonné et un emplacement ; et
la transmission (315), à l'entité depuis laquelle la demande de PFD a été reçue, d'un PFD avec l'au moins un premier autre paramètre correspondant à l'au moins un deuxième autre paramètre.

10. Entité d'analyse de données de réseau configurée pour réaliser le procédé selon l'une quelconque des revendications 1 à 3.

11. Entité de commande de politique configurée pour réaliser le procédé selon l'une quelconque des revendications 4 à 6.

12. Equipement utilisateur, UE, configuré pour réaliser le procédé selon l'une quelconque des revendications 7 à 8.

13. Entité de référentiel de données d'utilisateur configurée pour réaliser le procédé selon la revendication 9.
